# EUROPÄISCHE PATENTSCHRIFT

(11) **EP 1 031 367 B1**
(45) Veröffentlichungstag und Bekanntmachung des Hinweises auf die Patenterteilung: **07.05.2003**
(21) Anmeldenummer: 00103786.0
(22) Anmeldetag: 23.02.2000
(51) Int. Cl.: B01D 29/21, B01D 29/96

(54) **Flüssigkeitsfilter mit einem austauschbaren, ringförmigen Filterelement**
Liquid filter with replaceable ring shaped filter element
Filtre à liquide avec un élément filtrant remplacable de forme annulaire

(30) Priorität: 27.02.1999 DE 19908671
(43) Veröffentlichungstag der Anmeldung: 30.08.2000
(73) Patentinhaber: MAHLE Filtersysteme GmbH, 70376 Stuttgart (DE)
(72) Erfinder: Gebler, Claude Fr-d-ric, 70327 Stuttgart (DE); Monzie, Beno-t, 70469 Stuttgart (DE); Schneider, Horst, 71336 Waiblingen (DE)
(74) Vertreter: Patentanwalts-Partnerschaft, Rotermund + Pfusch + Bernard

(56) Entgegenhaltungen:
- DE-A- 4 022 723
- DE-U- 29 613 703

## Beschreibung

Die Erfindung betrifft ein Flüssigkeitsfilter mit einem austauschbaren, ringförmigen Filterelement nach dem Oberbegriff des Patentanspruchs 1.

Ein solches Flüssigkeitsfilter ist bekannt aus DE 40 22 723 A und DE 296 13 703 U.

Die Erfindung beschäftigt sich mit dem Problem, ein austauschbares gattungsgemäßes Filterelement rationell herstellbar zu gestalten und auf konstruktiv möglichst einfache Weise innerhalb des Filtergehäuses zu lagern.

Eine Lösung dieses Problems zeigt ein gattungsgemäßes Flüssigkeitsfilter mit den kennzeichnenden Merkmalen des Patentanspruchs 1 auf.

Ein besonderer Vorteil der Erfindung besteht darin, den Leerlaufkanal auf einfache Weise lediglich durch einen elastisch ausgebildeten Bereich einer Endscheibe des Filterelementes bei geschlossenem Filtergehäuse verschlossen halten zu können.

Zweckmäßige Ausgestaltungen der Erfindung sind Gegenstand der Unteransprüche.

Ausführungsbeispiele, die zur Erläuterung der Erfindung dienen, sind in der Zeichnung dargestellt und werden nachfolgend beschrieben.

Es zeigen
- Fig. 1: einen Längsschnitt durch ein Filtergehäuse mit einem austauschbaren Filterelement,
- Fig. 2: eine Draufsicht auf einen Ausschnitt aus einem im Inneren des Filtergehäuses liegenden Bodenbereich des Filters,
- Fig. 3: einen Längsschnitt durch ein Filter mit einem gegenüber der Ausführung in Fig. 1 alternativ gelagerten Filterelement,
- Fig. 4: einen Längsschnitt durch ein Filter mit einer nochmals andersartigen Lagerung des Filterelementes,
- Fig. 5: einen Ausschnitt aus dem axialen Endbereich des austauschbaren Filterelementes gemäß der Angabe V in der Fig. 1 in einer alternativen Ausführung.

Das Ausführungsbeispiel betrifft ein Schmierölfilter eines Fahrzeug-Verbrennungsmotors.

Dieses Filter besteht aus einem teilbaren Gehäuse mit einem an dem Verbrennungsmotor angeformten topfförmigen Unterteil 1, einem mit diesem lösbar und dicht verbindbaren, als Schraubdeckel ausgebildeten Oberteil 2 sowie einem austauschbar in dem Filtergehäuse gelagerten ringförmigen Filterelement 3. Das filternde Material des Filterelementes 3 ist ein zick-zack-förmig gefaltetes Bahnenmaterial. Die Stirnseiten des Filterelementes 3 sind als das Bahnenmaterial axial abdichtende ringförmige Endscheiben, nämlich als eine erste Endscheibe 4 und eine zweite Endscheibe 5, ausgebildet. Auf den Aufbau dieser Endscheiben 4, 5 wird nachfolgend noch näher eingegangen werden.

Bei dem Filter handelt es sich um ein sogenanntes stehend angeordnetes Filter, bei dem der Boden des Unterteiles 1 lotrecht unten liegt. In diesem Boden sind angeordnet eine Zulauföffnung 6 für die Zufuhr zu filternden Schmieröles, das das Filterelement von einem Rohraum 7 von radial außen nach innen in einen Reinraum 8 durchströmt, und eine Ablauföffnung 9, durch die das Filtrat das Filter verläßt.

In dem Boden des Unterteils 1 ist zusätzlich noch eine Leerlauföffnung 10 vorgesehen.

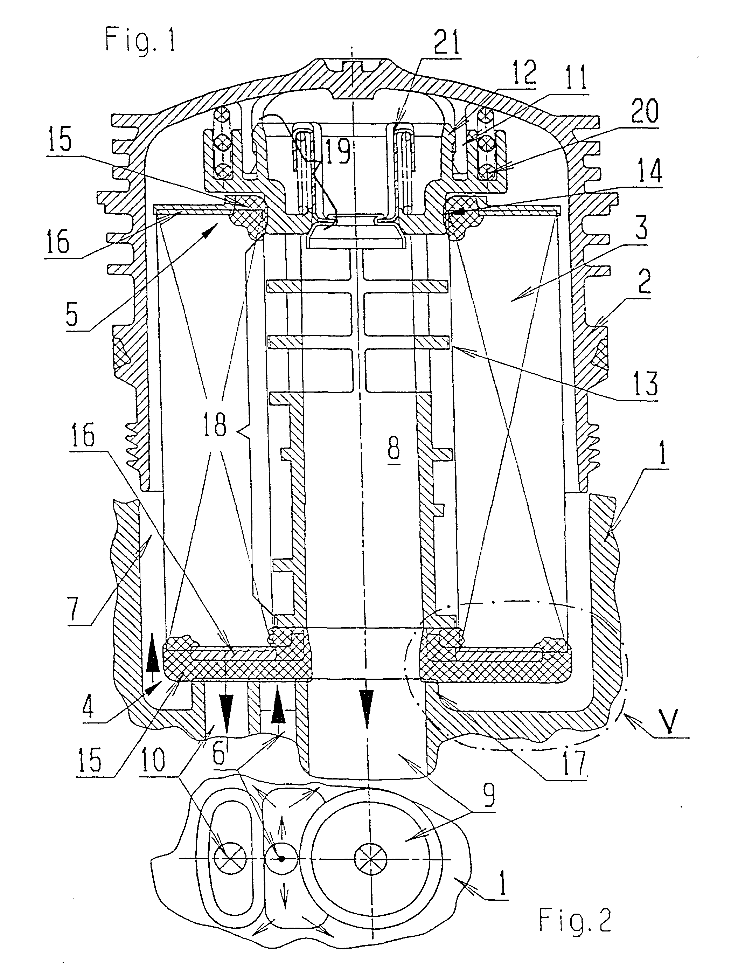

Bei der Ausführung nach Fig. 1 ist über einen Rastverschluß mit axial begrenzt gegeneinander verschiebbaren Rastmitteln 11 und 12 eine radial durchlässige Rohrzarge 13 drehbar mit dem Oberteil 2 verbunden.

Das Filterelement 3 ist an der Rohrzarge 13 austauschbar gelagert.

Bei der Ausführung nach Fig. 1 ist eine unterschiedliche Lagerung der jeweiligen Endscheiben 4 bzw. 5 des Filterelementes 3 an den jeweils zugeordneten Bereichen der Rohrzarge 13 vorgesehen.

Die zweite Endscheibe 5 des Filterelementes 3 ist an einem dem axial geschlossenen Bereich des Oberteiles 2 zugeordneten Ende der Rohrzarge 13 gelagert. An diesem Ende besitzt die Rohrzarge 13 einen die Öffnung der zweiten Endscheibe 5 des Filterelementes 3 dicht verschließenden Verschlußbereich 14. In diesem Verschlußbereich 14 ist an einer zylindrischen Außenumfangsfläche das Filterelement 3 über die zweite Endscheibe 5 radial gedichtet gelagert. Zur Erzielung der radialen Dichtung besteht die zweite Endscheibe 5 aus einem Grundmaterial 16 mit einem an dieses radial angeschäumten elastischen Dichtmaterial 15. Das Dichtmaterial 15 ist an das Grundmaterial 16 angeschäumter elastischer Kunststoff. Dabei ist das Grundmaterial 16 ebenfalls Kunststoff, jedoch im Vergleich zu dem zweiten Material praktisch unelastisch, das heißt im wesentlichen starr.

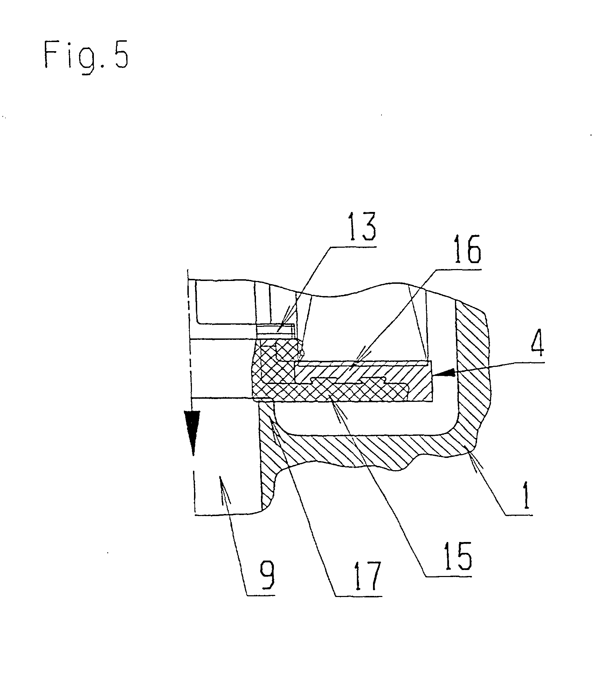

Die erste Endscheibe 4 besteht ebenfalls aus zwei Materialien, nämlich einem Grundmaterial 16 und wiederum gegenüber diesem elastischem, auf- bzw. angeschäumtem Dichtmaterial 15. Das Dichtmaterial 15 nimmt einen axial nach außen weisenden Bereich der ersten Endscheibe 4 sowie den radial innen liegenden Kantenbereich ein. Ein Verlauf bis in den radial außen liegenden Kantenbereich der ersten Endscheibe 4 kann gegeben sein (Fig. 1) oder auch nicht (Fig. 5).

Gelagert ist das Filterelement 3 im Bereich der ersten Endscheibe 4 durch ein Verspannen des an dem Filterelement 3 radial innen liegenden Bereiches des Dichtmaterials 15 zwischen dem freien Ende der Rohrzarge 13 und einer axialen Auflagefläche eines aus der Abflußöffnung 9 abragenden Ringbundes 17.

Damit der radial innen liegende Bereich des Dichtmaterials 15 an der ersten Endscheibe 4 des Filterelementes 3 axial elastisch verspannt werden kann, besitzt die Rohrzarge 13 außer eines ersten, innerhalb der axialen Länge des Filterelementes 3 liegenden Bereiches 18 noch einen mit diesem verbundenen zweiten Bereich 19. Zwischen diesem zweiten Bereich 19 der Rohrzarge 13 und dem geschlossenen axialen Ende des Oberteiles 2 ist eine Druckfeder 20 eingespannt. Durch diese Druckfeder 20 wird über den zweiten Bereich 19 der erste Bereich 18 der Rohrzarge 13 axial gegen das Dichtmaterial 15 an der ersten Endscheibe 4 axial unter elastischer Verformung des Dichtmaterials 15 angedrückt.

An der ersten Endscheibe 4 des Filterelementes 3 verläuft das elastische Dichtmaterial 15 bei der Ausführung nach Fig. 1 über die gesamte nach axial außen weisende Fläche. Hierdurch kann dieses Dichtmaterial 15 unter dem von der Rohrzarge 13 bei geschlossenem Filtergehäuse ausgehenden axialen, von der Druckfeder 20 aufgebrachten Druck, auch die Leerlauföffnung 10 durch axiale Anlage an deren Rand dicht verschließen.

In dem Verschlußbereich 14 der Rohrzarge 13 kann ein Überströmventil 21 vorgesehen sein.

Die Rohrzarge 13 kann gemäß Fig. 1 in dem unten liegenden Bereich radial undurchlässig als Steigrohr für abzuführendes Filtrat ausgebildet sein.

Zur Durchführung eines Filterelementeaustausches wird das Oberteil 2 von dem Unterteil 1 des Filtergehäuses abgeschraubt. Dabei verbleibt das Filterelement 3 in dem Verschlußbereich 14 der Rohrzarge 13 vorläufig fixiert. Dadurch wird das Dichtmaterial 15 an der ersten Endscheibe 4 von dem Dichtrand der Leerlauföffnung 10 abgehoben, so daß diese Öffnung für ein Leerlaufen des Filters freigegeben ist. Ist das Oberteil 2 mit dem an der Rohrzarge 13 verbliebenen Filterelement 3 von dem Unterteil 1 vollständig abgehoben, so kann das Filterelement 3 von der Rohrzarge 13 abgezogen und durch Aufschieben eines neuen Filterelementes 3 ersetzt werden.

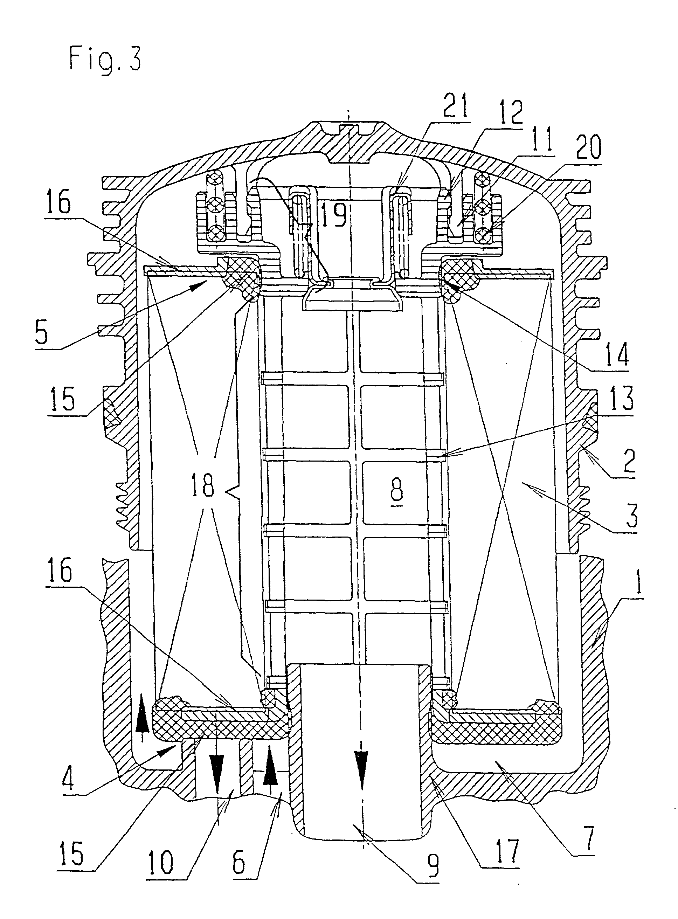

Von der Ausführung nach Fig. 1 unterscheidet sich diejenige nach Fig. 3 dadurch, daß zwischen dem Dichtmaterial 15 an der ersten Endscheibe 4 des Filterelementes 3 und dem Ringbund 17 an der Ablauföffnung 9 anstelle einer axialen eine radiale Dichtung vorgesehen ist.

Bei den Ausführungen in Fig. 1 und Fig. 3 kann an dem Außenumfang des Verschlußbereiches 14 zur Aufnahme der zweiten Endscheibe 5 des Filterelementes 3 ein axial hinterschnittener Abschnitt ausgebildet sein, damit dort eine axial stärkere Fixierung zwischen der Rohrzarge 13 und dem Filterelement 3 als bei der ersten Endscheibe 4 gegeben ist. Dadurch kann sichergestellt werden, daß das Filterelement 3 beim Abnehmen an dem Oberteil 2 und nicht an dem Unterteil 1 hängen bleibt. Anstelle eines Hinterschnittes kann es auch ausreichen, daß an der zweiten Endscheibe 5 ein radial stärkerer Preßsitz zwischen dem Dichtmaterial 15 und der Rohrzarge 13 gegeben ist als im Bereich der ersten Endscheibe 4 innerhalb des Unterteiles 1, wenn dort überhaupt eine radial wirkende Dichtung vorgesehen ist.

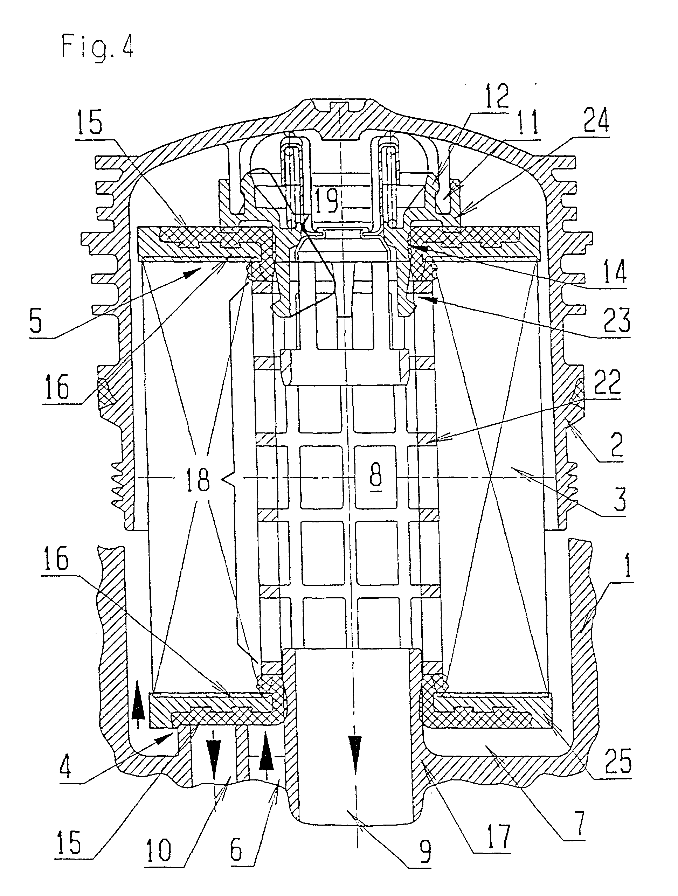

Von der Ausführung nach Fig. 3 unterscheidet sich diejenige nach Fig. 4 wiederum dadurch, daß dort zum einen eine fest mit dem Filterelement 3 verbundene Rohrzarge 22 vorgesehen ist und zum anderen eine Druckfeder 22 fehlt. Die beiden Endscheiben 4 und 5 des Filterelementes 3 sind in grundsätzlich gleicher Weise wie bei den Ausführungen nach den Fig. 1 und 3 ausgebildet. Wichtig bei der Ausbildung des Bereiches der ersten Endscheibe 4 ist, daß dort ein von der Rohrzarge 13 ausgeübter axialer Druck auf das Grundmaterial 16, das gegenüber dem Dichtmaterial 15 steifer ist, ausgeübt wird, damit das Dichtmaterial 15 auch dicht an dem Öffnungsrand der Leerlauföffnung 10 anliegen kann.

Ein zweiter, im wesentlichen außerhalb der axialen Länge des Filterelementes 3 liegender Bereich 19 der Rohrzarge 22 bei der Ausführung nach Fig. 4 ist ein von der Rohrzarge 22 getrenntes, mit dieser über einen Schnappverschluß 23 verbundenes getrenntes Teil 24. Dieses Teil 24 ist wiederum über gegenseitig axial begrenzt längsverschieblich ineinandergreifende Rastmittel 11, 12 mit dem Oberteil 2 verbunden.

Der Schnappverschluß 23 zwischen dem Teil 24 und der Rohrzarge 22 ist lösbar, um das Filterelement 3 mit lediglich der an diesem angebundenen Rohrzarge 22 austauschen zu können.

Die Funktion der fehlenden, bei den anderen Ausführungen vorhandenen Druckfeder 22 wird hier von dem elastischen Dichtmaterial 15 der beiden Endscheiben 4, 5 übernommen. Das Bauteil 24 stützt sich direkt auf dem elastischen Dichtmaterial der zweiten Enscheibe 5 ab, wobei durch ein Verpressen die erforderliche axiale Spannkraft entsteht.

In der Fig. 5 ist ein Ausschnitt V aus der ersten Endscheibe 4 des Filterelementes 3 aus Fig. 1 dargestellt, bei dem die Form des Grundmaterials 16 zur Aufnahme des Dichtmaterials 15 andersartig gestaltet ist, wodurch das Dichtmaterial 15 radial an einen axial frei abragenden äußeren Ringbund 25 angrenzt. Auch bei dieser Ausführung ist das Dichtmaterial 15 an der ersten Endscheibe 4 zur Dichtung der Leerlauföffnung 10 bei geschlossenem Filtergehäuse in der Lage.

Im Rahmen der erfindungsgemäßen Ausführungen kann das Filterelement 3 mit einer geschlossenen zweiten Endscheibe 5 versehen sein. In diesem Fall ist das Filterelement 3 mit dem Oberteil 2 in einer solchen Weise zu verbinden, wie dies bei den beschriebenen Ausführungsbeispielen mit Bezug auf den zweiten Bereich 19 der Rohrzarge 13 bzw. 22 der Fall ist. In dem geschlossenen Endbereich des Filterelementes 3 kann ein Überströmventil 21 vorgesehen sein.

Die Ausführung nach Fig. 4, bei der die Rohrzarge 22 fester Bestandteil des Filterelementes 3 ist, bietet den Vorteil, daß ein solches Filterelement 3 mit einer beliebigen Zuordnung seiner axialen Enden in das Filtergehäuse einsetzbar ist, d.h. es ist hier nicht auf eine bestimmte Einbaurichtung zu achten.

## Patentansprüche

1. Flüssigkeitsfilter, insbesondere Schmieröl- oder Kraftstoffilter eines Fahrzeug-Verbrennungsmotors, mit einem austauschbaren, von radial außen nach innen zu durchströmenden ringförmigen, eine erste und eine zweite axial jeweils dichtende Endscheibe aufweisenden Filterelement in einem Filtergehäuse mit einem im Betriebszustand unten liegenden, nach oben offenen, topfförmigen Unterteil und einem mit dem oberen Öffnungsrand dieses Unterteils dicht verbindbaren Oberteil, bei dem in dem Boden des Unterteils eine Filtrat-Ablauföffnung, sowie eine bei geschlossenem Filtergehäuse verschlossene Leerlauföffnung für einen Abfluß gefilterter und ungefilterter Flüssigkeit bei geöffnetem Filtergehäuse und ferner an einer beliebigen Stelle des Unterteils rohseitig des Filterelementes eine Zulauföffnung für die zu filternde Flüssigkeit vorgesehen sind,
**gekennzeichnet durch** die Merkmale,
- mindestens die an den Boden des Unterteils (1) des Filtergehäuses angrenzende erste Endscheibe (4) des Filterelementes (3) besitzt axial außen einen ersten Bereich aus elastischem Dichtmaterial (15),
- der erste Bereich aus elastischem Dichtmaterial (15) stützt sich in seinem dem Filterelement axial zugewandten Bereich an einem weniger elastischen Material (16) der ersten Endscheibe (4) ab,
- das elastische Dichtmaterial (15) des ersten Bereiches der ersten Endscheibe (4) des Filterelementes verschließt bei geschlossenem Filtergehäuse die Leerlauföffnung (10),
- bei verschlossener Leerlauföffnung (10) ist das elastische Dichtmaterial 15 des ersten Bereiches der ersten Endscheibe (4) gegenüber dem Rand der Leerlauföffnung (10) zumindest axial verspannt,
- die axiale Spannkraft zum Verschließen der Leerlauföffnung (10) geht von dem sich hierzu in dem Oberteil (2) des Filtergehäuses abstützenden Filterelement und/oder einem das Filterelement (3) tragenden oder mit diesem verbundenen Funktionsteil aus.

2. Flüssigkeitsfilter nach Anspruch 1,
**gekennzeichnet durch die Merkmale,**
- mindestens die an dem Boden des Unterteils (1) des Filtergehäuses anliegende erste Endscheibe (4) des Filterelementes (3) besitzt axial außen und/oder radial innen einen zweiten Bereich aus elastischem Dichtmaterial (15),
- das elastische Dichtmaterial (15) des zweiten Bereiches der ersten Endscheibe (4) dichtet **durch** radiale und/oder axiale Verspannung die Ablauföffnung (9) gegenüber der Rohseite des Filterelementes (3),
- bei gegenüber der Rohseite des Filterelementes (3) gedichteter Ablauföffnung (9) ist das elastische Dichtmaterial (15) des ersten Bereiches der ersten Endscheibe (4) gegenüber der Leerlauföffnung (9) axial und/oder radial verspannt,
- bei axialer Verspannung des elastischen Dichtmaterials (15) des zweiten Bereiches ist die Spannkraft ein Teil der das Verschließen der Leerlauföffnung (10) bewirkenden Spannkraft.

3. Flüssigkeitsfilter nach Anspruch 1 oder 2,
**dadurch gekennzeichnet,**
**daß** die axiale Spannkraft für das Verpressen des elastischen Dichtmaterials (15) des ersten und/oder zweiten Bereiches der ersten Stirnseite (4) des Filterelementes, die zwischen dem Oberteil (2) des Filtergehäuses und der ersten Endscheibe (4) des Filterelementes (3) wirkt, außerhalb eines axial eng begrenzten Bereiches der ersten Endscheibe (4) ausschließlich von mindestens einem von dem Filterelement (3) getrennten, als Rohrzarge (13, 22) ausbildeten Funktionsteil übertragen wird.

4. Flüssigkeitsfilter nach einem der vorhergehenden Ansprüche,
**dadurch gekennzeichnet,**
**daß** zumindest ein erster Bereich (18) des Funktionsteiles als eine das Filterelement (3) radial innen abstützende, radial durchlässige Rohrzarge (13, 22) ausgebildet ist.

5. Flüssigkeitsfilter nach Anspruch 4,
**dadurch gekennzeichnet,**
**daß** ein zweiter Bereich (19) des Funktionsteiles an der zweiten Endscheibe (5) angreift und dort durch eine dichte, lösbare Verbindung den roh- von dem reinseitigen Filterraum trennt.

6. Flüssigkeitsfilter nach Anspruch 5,
**dadurch gekennzeichnet,**
**daß** der zweite Bereich (19) des Funktionsteiles über an diesem und dem Oberteil (2) angebrachte, in gegenseitigen Eingriff bringbare Rastmittel (11, 12) mit dem Oberteil (2) axial begrenzt verschieblich verrastbar ist.

7. Flüssigkeitsfilter nach einem der vorhergehenden Ansprüche,
**dadurch gekennzeichnet,**
**daß** sich das Funktionsteil über eine bei geschlossenem Filtergehäuse gespannte Druckfeder (20) an dem Oberteil (2) des Filtergehäuses abstützt.

8. Flüssigkeitsfilter nach einem der vorhergehenden Ansprüche,
**dadurch gekennzeichnet,**
**daß** das Funktionsteil in demjenigen Bereich, in dem es den Filterroh- und Reinraum voneinander getrennt, mit einem Überströmventil (21) versehen ist.

9. Flüssigkeitsfilter nach einem der vorhergehenden Ansprüche,
**dadurch gekennzeichnet,**
**daß** der zweite Bereich des Funktionsteiles (19) ein von dem ersten Bereich (18) getrenntes, mit letzteren axial begrenzt verschiebbar verbundenes Bauteil ist, mit dem die axial zu übertragende Spannkraft auf den ersten Bereich (18) des Funktionsteiles übertragen wird.

10. Flüssigkeitsfilter nach Anspruch 9,
**dadurch gekennzeichnet,**
**daß** die Kraft zwischen den beiden Bereichen des Funktionsteiles (18, 19) axial über einen von Dichtmaterial (15) gebildeten elastischen Bereich der zweiten Endscheibe (5) des Filterelementes (3) übertragen wird, wobei dieser elastische Bereich mit einem Grundmaterial (16) - Bereich der zweiten Endscheibe (5) verbunden ist, der aus einem weniger elastischen Material als dasjenige in dem elastischen Bereich besteht.

11. Flüssigkeitsfilter nach einem der vorhergehenden Ansprüche,
**dadurch gekennzeichnet,**
**daß** das elastische Dichtmaterial (15) der ersten Endscheibe (4) und dasjenige des elastischen Bereiches der zweiten Endscheibe (5) des Filterelementes (3) jeweils angeschäumter Kunststoff sind.

## Claims

1. A liquid filter, in particular a lubricant oil filter or a fuel filter for an internal combustion engine in an automobile, having a replaceable, ring-shaped filter element through which liquid flows from the outside to the inside radially, having a first and second end disk, each sealed axially, in a filter housing with a pot-shaped bottom part situated at the bottom in the operating state and open at the top and with a top part connected tightly to the top opening edge of this bottom part, whereby a filtrate drain opening is provided in the bottom of the bottom part, and a drain opening sealed when the filter housing is closed for draining out filtered and unfiltered liquid when the filter housing is opened, and furthermore an inlet opening for the liquid to be filtered is provided on the crud liquid side of the filter element at any desired location on the bottom part,
**characterized by** the features
- at least the first end disk (4) of the filter element (3) adjacent to the bottom of the bottom part (1) of the filter housing has a first area made of an elastic sealing material (15) on the outside radially;
- the first area made of elastic sealing material (15) is supported in its area facing the filter element axially on a less elastic material (16) of the first end disk (4);
- the elastic sealing material (15) of the first area of the first end disk (4) of the filter element seals the drain opening (10) when the filter housing is closed;
- when the drain opening (10) is closed, the elastic sealing material (15) of the first area of the first end disk (4) is under tension at least axially with respect to the edge of the drain opening (10);
- the axial tension force for sealing the drain opening (10) emanates from the filter element supported for this purpose in the top part (2) of the filter housing and/or a function part supporting the filter element (3) and/or connected to it.

2. The liquid filter according to Claim 1,
**characterized by** the features
- at least the first end disk (4) of the filter element (3) adjacent to the bottom of the bottom part (1) of the filter housing has a second area made of an elastic sealing material (15) on the outside axially and/or on the inside radially;
- the elastic sealing material (15) of the second area of the first end disk (4) seals through radial and/or axial tension the drain opening (9) with respect to the crude liquid side of the filter element (3);
- with the drain opening (9) sealed with respect to the crude liquid side of the filter element (3), the elastic sealing material (15) of the first area of the first end disk (4) is under tension axially and/or radially with respect to the drain opening (9);
- with axial tension on the elastic sealing material (15) of the second area, the tension force is part of the tension force producing the seal of the drain opening (10).

3. The liquid filter according to Claim 1 or 2,
**characterized in that**
the axial tension force for pressing the elastic sealing material (15) of the first and/or second area of the first end side (4) of the filter element, which acts between the top part (2) of the filter housing and the first end disk (4) of the filter element (3), is transmitted outside an axially narrowly limited area of the first end disk (4) exclusively from at least one function part, which is designed as a pipe frame (13, 22) and is separate from the filter element (3).

4. The liquid filter according to one of the preceding claims,
**characterized in that**
at least one first area (18) of the function part is designed as a radially permeable pipe frame (13, 22) supporting the filter element (3) on the inside radially.

5. The liquid filter according to Claim 4,
**characterized in that**
a second area (19) of the function part acts on the second end disk (5) and a tight, detachable connection there separates the crude liquid side of the filter
from the clean side.

6. The liquid filter according to Claim 5,
**characterized in that**
the second area (19) of the function part is displaceably lockable to the top part (2) to a limited extent axially by means of mutually engageable catch means (11, 12) mounted on the function part and on the top part (2).

7. The liquid filter according to one of the preceding claims,
**characterized in that**
the function part is supported on the top part (2) of the filter housing by means of a compression spring (20) which is under tension when the filter housing is closed.

8. The liquid filter according to one of the preceding claims,
**characterized in that**
the function part is provided with an overflow valve (21) in the area in which it separates the filter crude chamber from the clean chamber.

9. The liquid filter according to one of the preceding claims,
**characterized in that**
the second area of the function part (19) is a
component which is separated from the first area (18) and is displaceably connected to the latter to an axially limited extent; with this component, the tension force to be transmitted axially is transmitted to the first area (18) of the function part.

## Revendications

1. Filtre à liquide, en particulier filtre à huile lubrifiante ou à carburant d'un moteur à combustion interne d'un véhicule, comprenant un élément filtrant interchangeable annulaire à balayer de la direction radiale extérieure vers l'intérieur, muni d'un premier et d'un second disques d'extrémité assurant chacun l'étanchéité dans la direction axiale, dans un boîtier filtrant avec une partie inférieure en forme de pot ouverte vers le haut, située en partie basse à l'état de fonctionnement, et avec une partie supérieure pouvant être assemblée hermétiquement avec le bord d'ouverture supérieur de cette partie inférieure, boîtier sur lequel sont prévues dans le fond de la partie inférieure une ouverture d'évacuation du filtrat, ainsi qu'une ouverture de vidange fermée en position de fermeture du boîtier filtrant pour un écoulement du liquide filtré et non filtré en position d'ouverture du boîtier filtrant, et en outre une ouverture d'admission en un endroit quelconque de la partie inférieure, sur le côté brut de l'élément filtrant, pour le liquide à filtrer, **caractérisé par** les caractéristiques,
- au moins le premier disque d'extrémité (4) de l'élément filtrant (3), limitrophe au fond de la partie inférieure (1) du boîtier filtrant, présente une première zone en matériau d'étanchéité élastique (15) dans la direction axiale extérieure,
- dans sa zone tournée dans la direction axiale vers l'élément filtrant, la première zone en matériau d'étanchéité élastique (15) s'appuie sur un matériau moins élastique (16) du premier disque d'extrémité (4),
- le matériau d'étanchéité élastique (15) de la première zone du premier disque d'extrémité (4) de l'élément filtrant ferme l'ouverture de vidange (10) en position de fermeture du boîtier filtrant,
- en position de fermeture de l'ouverture de vidange (10), le matériau d'étanchéité élastique (15) de la première zone du premier disque d'extrémité (4) est serré par rapport au bord de l'ouverture de vidange (10) au moins dans la direction axiale,
- la force de serrage axiale pour la fermeture de l'ouverture de vidange (10) est issue de l'élément filtrant s'appuyant à cet effet dans la partie supérieure (2) du boîtier filtrant et/ou d'une partie fonctionnelle supportant l'élément filtrant (3) ou assemblée avec ce dernier.

2. Filtre à liquide suivant la revendication 1, **caractérisé par** les caractéristiques,
- au moins le premier disque d'extrémité (4) de l'élément filtrant (3) s'appliquant sur le fond de la partie inférieure (1) du boîtier filtrant présente une seconde zone en matériau d'étanchéité élastique (15) dans la direction axiale extérieure et/ou radiale intérieure,
- le matériau d'étanchéité élastique (15) de la seconde zone du premier disque d'extrémité (4) étanchéifie l'ouverture d'évacuation (9) par rapport au côté brut de l'élément filtrant (3) par serrage radial et/ou axial,
- lorsque l'ouverture d'évacuation (9) est étanchéifiée par rapport au côté brut de l'élément filtrant (3), le matériau d'étanchéité élastique (15) de la première zone du premier disque d'extrémité (4) est serré par rapport à l'ouverture de vidange (9) dans la direction axiale et/ou radiale,
- lors du serrage axial du matériau d'étanchéité élastique (15) de la seconde zone, la force de serrage est une partie de la force de serrage provoquant la fermeture de l'ouverture de vidange (10).

3. Filtre à liquide suivant l'une des revendications 1 et 2, **caractérisé en ce que** la force de serrage axiale pour la compression du matériau d'étanchéité élastique (15) de la première et/ou de la seconde zones du premier côté frontal (4) de l'élément filtrant, qui agit entre la partie supérieure (2) du boîtier filtrant et le premier disque d'extrémité (4) de l'élément filtrant (3), est transmise à l'extérieur d'une zone du premier disque d'extrémité (4), étroitement délimitée dans la direction axiale, exclusivement par au moins une partie fonctionnelle séparée de l'élément filtrant (3), réalisée sous forme de cadre tubulaire (13, 22).

4. Filtre à liquide suivant l'une des revendications précédentes, **caractérisé en ce qu'**au moins une première zone (18) de la partie fonctionnelle est réalisée sous forme d'un cadre tubulaire (13, 22) perméable dans la direction radiale, supportant dans la direction radiale intérieure l'élément filtrant (3).

5. Filtre à liquide suivant la revendication 4, **caractérisé en ce qu'**une seconde zone (19) de la partie fonctionnelle agit sur le second disque d'extrémité (5) et y sépare l'espace brut de l'espace épuré du filtre par un assemblage hermétique amovible.

6. Filtre à liquide suivant la revendication 5, **caractérisé en ce que** la seconde zone (19) de la partie fonctionnelle peut s'encliqueter avec la partie supérieure (2) par un déplacement limité dans la direction axiale par l'intermédiaire de moyens d'encliquetage (11, 12), montés sur cette zone et sur la partie supérieure (2) et pouvant être amenés en prise mutuelle.

7. Filtre à liquide suivant l'une des revendications précédentes, **caractérisé en ce que** la partie fonctionnelle s'appuie sur la partie supérieure (2) du boîtier filtrant par l'intermédiaire d'un ressort de compression (20) tendu en position de fermeture du boîtier filtrant.

8. Filtre à liquide suivant l'une des revendications précédentes, **caractérisé en ce que** la partie fonctionnelle est munie d'une soupape de décharge (21) dans la zone dans laquelle elle sépare l'un de l'autre l'espace brut et l'espace épuré du filtre.

9. Filtre à liquide suivant l'une des revendications précédentes, **caractérisé en ce que** la seconde zone de la partie fonctionnelle (19) est un composant séparé de la première zone (18), assemblé avec cette dernière avec une possibilité de déplacement limitée dans la direction axiale, par lequel est transmise la force de serrage, à transmettre dans la direction axiale, à la première zone (18) de la partie fonctionnelle.

10. Filtre à liquide suivant la revendication 9, **caractérisé en ce que** la force entre les deux zones de la partie fonctionnelle (18, 19) est transmise dans la direction axiale par l'intermédiaire d'une zone élastique du second disque d'extrémité (5) de l'élément filtrant (3), formée par du matériau d'étanchéité (15), cette zone élastique étant assemblée avec une zone de matériau de base (16) du second disque d'extrémité (5), composée d'un matériau moins élastique que celui de la zone élastique.

11. Filtre à liquide suivant l'une des revendications précédentes, **caractérisé en ce que** le matériau d'étanchéité élastique (15) du premier disque d'extrémité (4) et celui de la zone élastique du second disque d'extrémité (5) de l'élément filtrant (3) sont chacun de la matière plastique moussée.
